# EUROPEAN PATENT SPECIFICATION

(11) **EP 4 231 433 B1**
(45) Date of publication and mention of the grant of the patent: **04.02.2026**
(21) Application number: 23157179.5
(22) Date of filing: 17.02.2023
(51) Int. Cl.: H01M 50/491, H01M 4/36, H01M 4/38, H01M 4/583, H01M 10/052, H01M 10/0568, H01M 10/0569, H01M 50/457

(54) **SEPARATOR FOR LITHIUM-SULFUR BATTERY AND LITHIUM-SULFUR BATTERY COMPRISING THE SAME**
SEPARATOR FÜR LITHIUM-SCHWEFEL-BATTERIE UND LITHIUM-SCHWEFEL-BATTERIE DAMIT
SÉPARATEUR POUR BATTERIE LITHIUM-SOUFRE ET BATTERIE LITHIUM-SOUFRE LE COMPRENANT

(30) Priority: 21.02.2022 KR 20220022383; 23.12.2022 KR 20220183787
(43) Date of publication of application: 23.08.2023
(73) Proprietor: LG Energy Solution, Ltd., Seoul 07335 (KR)
(72) Inventor: LEE, Hyun-Soo, 34122 Daejeon (KR); PARK, Seong-Hyo, 34122 Daejeon (KR); PARK, In-Tae, 34122 Daejeon (KR); KIM, Yong-Hwi, 34122 Daejeon (KR); SONG, Myeong-Jun, 34122 Daejeon (KR); CHOI, Ran, 34122 Daejeon (KR)
(74) Representative: Goddar, Heinz J.

(56) References cited:
- EP-A1- 3 422 439
- EP-A1- 3 460 894
- US-A1- 2014 106 239

## Description

### TECHNICAL FIELD

The present invention relates to a separator for a lithium-sulfur battery and a lithium-sulfur battery comprising the same. The present application claims the benefit of Korean patent applications No 10-2022-0022383, filed on February 21, 2022, and No 10-2022-0183787 filed on December 23, 2022.

### BACKGROUND ART

As the application range of lithium secondary batteries extends to not only portable electronic devices, but also electric vehicles (EV) and electric storage systems (ESS), demand for lithium secondary batteries with high capacity, high energy density, and long lifetime is increasing.

Among various lithium secondary batteries, a lithium-sulfur battery is a battery system that uses a sulfur-based material containing a sulfur-sulfur bond as a positive electrode active material, and uses lithium metal, a carbon-based material capable of intercalating/deintercalating lithium ions, or silicon, tin or the like, which forms an alloy with lithium, as a negative electrode active material.

In the lithium-sulfur battery, there is an advantage that sulfur, which is the main material of the positive electrode active material, has a low atomic weight, is very rich in resources and thus easy to supply and receive, and is cheap, non-toxic, and environmentally friendly.

In addition, the lithium-sulfur battery has a theoretical specific capacity of 1,675 mAh/g from the conversion reaction of lithium ions and sulfur (S₈+16Li⁺+16e⁻ → 8Li₂S) in the positive electrode, and when lithium metal is used as the negative electrode, the theoretical energy density of 2,600 Wh/kg is shown. Since the theoretical energy density of the lithium-sulfur battery is much higher than the theoretical energy density of other battery systems (Ni-MH battery: 450 Wh/kg, Li-FeS battery: 480 Wh/kg, Li-MnO₂ battery: 1,000 Wh/kg, Na-S battery: 800 Wh/kg) and lithium ion battery (250 Wh/kg) currently under study, the lithium-sulfur battery is attracting attention as a highcapacity, eco-friendly, and inexpensive lithium secondary battery among the secondary batteries developed so far.

Specifically, in the case of a lithium-sulfur battery, when lithium metal is used as the negative electrode active material, since the theoretical specific capacity is very high as 3,860 mAh/g, and the standard reduction potential (Standard Hydrogen Electrode; SHE) is also very low as -3.045 V, it is possible to realize a battery with high capacity and high energy density, so several studies are being conducted as a next-generation battery system.

However, as lithium metal, which is a negative electrode active material, reacts easily with the electrolyte due to its high chemical/electrochemical reactivity, a passivation layer is formed on the surface of the negative electrode. Such a passivation layer causes a local difference in current density, thereby forming lithium dendrite on the surface of lithium metal. In addition, the lithium dendrite formed in this way causes an internal short circuit and inert lithium (dead lithium) of the battery, thereby causing problems of increasing the physical and chemical instability of the lithium secondary battery, as well as reducing the battery capacity and reducing the cycle lifetime.

Thus, lithium-sulfur batteries undergo a reduction reaction in which sulfur accepts electrons at the positive electrode and an oxidation reaction in which lithium is ionized at the negative electrode during discharge.

In the lithium-sulfur batteries, lithium polysulfide (Li₂Sₓ, x = 2 to 8) is produced at the positive electrode during the discharge, and some of the lithium polysulfide is dissolved in an electrolyte, causing side reaction in the battery, inducing faster degradation of the battery, and also shuttle reactions may occur during the charge, resulting in significantly reduced charge/discharge efficiency. Moreover, as mentioned above, lithium metal used for the negative electrode continuously reacts with the electrolyte, leading to accelerated decomposition of lithium salts and additives of the electrolyte.

As mentioned above, the formation of polysulfides results in deterioration of battery life characteristics.

Recently, sparingly solvating electrolyte (SSE) systems have been proposed to prevent the release of polysulfides, and it has been found that 90% or higher of the theoretical capacity can be achieved by using a high specific-surface-area carbon material having a BET specific surface area of 1500 m²/g or higher.

However, it is still necessary to improve life characteristics and output characteristics of lithium-sulfur batteries.

In this regard, in order to realize battery systems with high energy density of 400 Wh/kg or 600 Wh/L or higher, it is necessary to develop lithium-sulfur batteries that can operate at 4.0 mAh/cm² or higher.

In lithium-sulfur batteries, the positive electrode material may be prepared by a dry manufacturing method, which may result in non-uniform reactivity of the positive electrode material.

Within a lithium- sulfur battery comprising positive electrode (cathode), positive electrode active material, negative electrode (anode), negative electrode active material, separator interposed between the positive electrode and the negative electrode , as well as electrolyte, the separator plays an important role so that the battery may be operated at high energy density and close to the theoretical capacity of sulfur (S) to improve life characteristics. EP3460894 discloses a separator having a thickness of 20 µm and a porosity of 45% to which a non-woven fabric having a thickness of 20 µm and a porosity of 70% or 72% is attached to form an electrolyte buffer layer capable of locking the polysulfide formed at the positive sulfur electrode.

EP3422439 refers to a carbonized non-woven electrode reactive layer having a porosity of 70% and a thickness of 25 µm laminated on a porous film of polyethylene separator having a thickness of 20 µm and a porosity of 45%.

US2014106239 discloses a two-layer separator including a layer having a thickness of 25 µm and a porosity of 39% and a layer having a thickness of 140 µm and a porosity of 55%.

### DISCLOSURE

### TECHNICAL PROBLEM

There is a need to develop a separator for a lithium-sulfur battery overcoming drawbacks of the prior art, especially to provide a separator for a lithium-sulfur-battery having a high energy density of 400 Wh/kg and 600 Wh/L or higher so that the lithium-sulfur battery may be operated as close as possible at the theoretical capacity of sulfur (S), and to improve life characteristics of a lithium-sulfur battery.

There is also a need to develop a lithium-sulfur battery comprising a respective separator. Further, non-uniform reactivity of especially the positive electrode material shall be reduced.

### TECHNICAL SOLUTION

The present disclosure relates to a separator for a lithium-sulfur battery, and according to a first aspect of the present disclosure, in the separator for a lithium-sulfur battery, the separator comprises a first layer having a porosity of 50 vol% or more, wherein the first layer is on a first surface of the separator, a thickness of the first layer is 50% or more of 100% of a thickness of the separator and the thickness of the first layer 40 µm to 400 µm wherein the porosity and the thickness are measured as disclosed herein; and the separator comprises a second layer having a porosity of 25 vol% or more and less than 50 vol%, the second layer is on a second surface opposite the first surface of the separator, and the thickness of the second layer is from 10 µm to 20 µm.

According to a second aspect of the present disclosure, in the first aspect, the porosity of the first layer is 80 vol% or less.

According to a third aspect of the present disclosure, in the first aspect, the separator comprises the first layer and the second layer, and the first layer and the second layer are stacked in a sequential order.

According to a fourth aspect of the present disclosure, in any one of the first to third aspects, the first layer is a monolayer or a multilayer comprising at least two unit layers, and when the first layer comprises the at least two unit layers, each unit layer has a porosity of 50 vol% or more and 80 vol% or less.

According to a fifth aspect of the present disclosure, in the fourth aspect, when the first layer is the multilayer, the unit layers are arranged with the porosity increasing towards the first surface on a basis of a thickness-wise direction of the separator.

According to a sixth aspect of the present disclosure, in any one of the first to fifth aspects, the second layer is a monolayer or a multilayer comprising at least two unit layers, and when the second layer comprises the at least two unit layers, each unit layer has a porosity of less than 50 vol% and 25 vol% or more.

According to an seventh aspect of the present disclosure, in the sixth aspect, when the second layer is the multilayer, the unit layers are arranged with the porosity decreasing towards the second surface on a basis of a thickness-wise direction of the separator.

According to a eighth aspect of the present disclosure, in any one of the first to seventh aspects, the thickness of the separator is 20 *µ*m to 500 µm.

According to a ninth aspect of the present disclosure, in any one of the first to eighth aspects, the first layer comprises at least one of a porous polymer film, a porous nonwoven fabric comprising a polymer material, a glass fiber and a carbon paper.

According to an tenth aspect of the present disclosure, in any one of the first to ninth aspects, the second layer comprises a porous polymer film, or a porous nonwoven fabric comprising a polymer material or both of them.

An eleventh aspect of the present disclosure relates to a lithium-sulfur battery. The lithium-sulfur battery according to the present disclosure comprises an electrode assembly and an electrolyte, wherein the electrode assembly comprises a positive electrode, a negative electrode and a separator between the negative electrode and the positive electrode, the positive electrode comprises a positive electrode active material layer, the positive electrode active material layer comprises a sulfur and/or a sulfur compound, the separator is defined in any one of aspects 1 to 10, and the first layer of the separator is in contact with the positive electrode active material layer.

According to a twelfth aspect of the present disclosure, in the eleventh aspect, the electrolyte comprises a lithium salt and an organic solvent, and the organic solvent comprises a first organic solvent comprising a fluorinated ether compound and a second organic solvent comprising a glyme-based compound.

According to a thirdteenth aspect of the present disclosure, in the eleventh or twelfth aspect, the sulfur and/or the sulfur compound is included in the positive electrode active material layer in a form of a sulfur-carbon composite, and the sulfur and/or the sulfur compound is included in an amount of 60 wt% or more based on 100 wt% of the positive electrode active material layer.

According to a fourteenth aspect of the present disclosure, in the thirdteenth aspect, the sulfur-carbon composite comprises sulfur and carbon at a weight ratio of 60:40 to 80:20.

According to a fifteenth aspect of the present disclosure, in any one of the eleventh to fourteenth aspects, the positive electrode comprises a current collector and a positive electrode active material layer on at least one surface of the current collector, the positive electrode active material layer comprises only a positive electrode active material, the positive electrode active material is included in an amount of 99 wt% or more based on 100 wt% of the positive electrode active material layer, the positive electrode active material comprises a sulfur-carbon composite in an amount of 90 wt% or more based on 100 wt% of the positive electrode active material, and the sulfur-carbon composite comprises the sulfur and/or the sulfur compound.

According to a sixteenth aspect of the present disclosure, in any one of the elevneth to fifteenth aspects, the negative electrode comprises a negative electrode active material, the negative electrode active material comprises a lithium metal and/or a lithium alloy, and the lithium alloy is an alloy of a lithium with a metal.

According to an seventeenth aspect of the present disclosure, in any one of the twelfth to sixteenth aspects, the first and second organic solvents are included in an amount of 90 vol% or more based on 100 vol% of the total organic solvent.

According to a eigtheenth aspect of the present disclosure, in any one of the twelfth to seventeenth aspects, the first organic solvent comprises at least one selected from the group consisting of 1,1,2,2-tetrafluoroethyl 2,2,3,3-tetrafluoropropyl ether (TTE), bis(fluoromethyl) ether, 2-fluoromethyl ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropyl ethyl ether, 1H,1H,2'H,3H-decafluorodipropyl ether and 1H,1H,2'H-perfluorodipropyl ether.

According to a ninteenth aspect of the present disclosure, in the twelfth to eighteenth aspects, the second organic solvent does not comprise fluorine and comprises at least one selected from the group consisting of dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether.

According to a twentieth aspect of the present disclosure, in any one of the eleventh to ninteenth aspects, the electrolyte comprises lithiumbis(trifluoromethanesulfonyl)imide, dimethoxyethane and 1,1,2,2-tetrafluoroethyl-2,2,3,3-tetrafluoropropyl ether.

### ADVANTAGEOUS EFFECTS

The present invention provides a separator which can be used in a lithium-sulfur battery so that the lithium-sulfur battery may achieve high energy density of 400 Wh/kg and 600 Wh/L or higher and allows to be operated close to the theoretical capacity of sulfur (S). Further, life characteristics of the lithium-sulfur battery are improved, non-uniform reactivity of the positive electrode material may be reduced and the lithium-sulfur battery may be driven.

The lithium-sulfur battery according to the present disclosure can achieve high discharge capacity of sulfur (S) with a small amount of positive electrode material.

The lithium-sulfur battery according to the present disclosure can reduce the process cost for manufacturing the positive electrode due to the use of the dry manufacturing method including compressing the positive electrode active material powder into a predetermined shape without preparing a slurry for an electrode active material layer in the manufacture of the positive electrode.

Due to the use of the multi-layered separator, the lithium-sulfur battery according to the present disclosure can solve the nonuniform reactivity problem of the positive electrode manufactured by the dry manufacturing method.

Best results are achieved for the specific embodiments described herein and any combinations thereof.

### Description of drawings

FIG. 1 is a graph showing the cyclic voltammetry evaluation results of a lithium-sulfur battery of Example 1 (not according to the invention).
FIG. 2 is a graph showing the cyclic voltammetry evaluation results of a lithium-sulfur battery of Example 2.
FIG. 3 is a graph showing the cyclic voltammetry evaluation results of a lithium-sulfur battery of Example 3.
FIG. 4 is a graph showing the cyclic voltammetry evaluation results of a lithium-sulfur battery of Example 4.
FIG. 5 is a graph showing the cyclic voltammetry evaluation results of a lithium-sulfur battery of Comparative Example 1.
FIG. 6 is a graph showing the cyclic voltammetry evaluation results of a lithium-sulfur battery of Comparative Example 2.
FIG. 7 is a graph showing the cyclic voltammetry evaluation results of a lithium-sulfur battery of Comparative Example 3.
FIG. 8 is a graph showing the cyclic voltammetry evaluation results of a lithium-sulfur battery of Comparative Example 4.

### DETAILED DESCRIPTION OF THE INVENTION

The terms and words used in the present specification and in the claims should not be construed as limited to ordinary or dictionary terms and should be construed in a sense and concept consistent with the technical idea of the present invention, based on the principle that the inventor can properly define the concept of a term to describe this invention in a best way possible.

The terms ┌about┘: and ┌substantially┘ are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure. In the present disclosure, 'particle diameter D₅₀' refers to a particle size at 50% of the volume-cumulative particle size distribution of particles. The particle diameter D₅₀ may be measured by the laser diffraction method. For example, it may be measured by dispersing particles in a dispersion medium, introducing into a commercially available laser diffraction particle size analyzer (for example, Microtrac MT 3000), irradiating ultrasound of about 28 kHz with an output of 60 W to acquire a volume-cumulative particle size distribution graph, and determining a particle size corresponding to 50% of the cumulative volume.

Additionally, the size and thickness of each element in the accompanying drawings is arbitrary for convenience of description, and the present disclosure is not necessarily limited thereto. In the accompanying drawings, the thickness is exaggerated to clearly represent different layers and portions. Additionally, in the accompanying drawings, for convenience of description, the thickness is exaggerated to clearly represent some layers and portions.

The terminology used herein is for the purposes of describing particular embodiments only and is not intended for delimiting of the invention. The singular forms "a", "an", and "the" comprise plural reference unless the context dictates otherwise. It is to be understood that the terms such as "comprise" or "have" as used in the present specification are indented to designate the presence of stated features, numbers, steps, operations, components, parts or combinations thereof, but not to preclude the possibility of the presence or addition of one or more other features, numbers, steps, operations, components, parts, or combinations thereof. The term "comprises" explicitly, even if not necessarily limited accordingly, includes the meaning "consists of".

The term "composite" as used herein refers to a material that two or more materials are combined to express a more effective function while forming physically and chemically different phases to each other.

The term "polysulfide" as used herein is a concept comprising both "polysulfide ion (Sₓ²⁻ , x = 2-8)" and "lithium polysulfide (Li₂Sₓ or LiSₓ⁻, x = 2-8)".

In the present disclosure, 'specific surface area' is measured by the BET method. Specifically, it may be calculated from the adsorption amount of nitrogen gas under the liquid nitrogen temperature (77K) using BEL Japan's BELSORP-mino II.

The term 'porosity' used in the present specification refers to a fraction of voids in a structure over the total volume and is indicated in vol%, and may be used interchangeably with void fraction, degree of porosity or the like.

In the present disclosure, a method for measuring the porosity is not particularly limited. In an exemplary embodiment of the present disclosure, the porosity may be measured using a porosimetry analyzer, for example, BEL Japan's BELSORP (BET instrument) by using an adsorbent gas such as nitrogen.

The present invention relates to a separator for a lithium-sulfur battery comprising a second porous separator layer and a first porous separator layer stacked on each other, wherein the first porous separator layer has a porosity of 50vol% or more. Further, the present disclosure relates to a lithium-sulfur battery comprising a positive electrode comprising a positive electrode active material layer, a negative electrode comprising a negative electrode active material layer, a separator as above interposed between the positive electrode and the negative electrode , and an electrolyte, wherein the second porous separator layer faces the negative electrode active material layer and the first porous separator layer faces the positive electrode active material layer.

Herein after, the separator and the lithium-sulfur battery according to the present invention will be described in more detail.

### Separator

The separator has a structure in which a plurality of porous membranes may be stacked on one another. In the present disclosure, the separator may comprise a first layer and a second layer, and in the lithium-sulfur battery according to the present disclosure, the first layer is disposed in contact with a positive electrode active material layer when making the electrode assembly. The positive electrode active material layer may have the structural features described below. In the present disclosure, the porosity of the first layer may be larger than the porosity of the second layer. The porosity of the first layer may be 50 vol% or more. The porosity of the second layer may be less than 50 vol%.

**In an embodiment** of the present disclosure, the thickness of the separator may be 20 *µ*m to 500 *µ*m.

### First porous separator layer

The first porous separator layer is disposed on one of the two surfaces of the separator and comes into contact with the positive electrode active material layer. As described below, in the lithium-sulfur battery according to the present disclosure, the positive electrode active material layer may not comprise a binder or comprises a very small amount of binder and may be formed by the powder compaction method, and in the case of the positive electrode manufactured by the above-described method, non-uniform charging may occur when charged.

To prevent the non-uniform charging of the compacted powder type positive electrode, the porosity of the first layer of the separator is preferably 50 vol% or more. Preferably, the porosity may be 50 vol% to 80 vol%. When the porosity of the first layer is less than 50 vol%, non-uniform charging prevention is insignificant and the battery may not normally operate. In contrast, when the porosity exceeds 80 vol%, the mechanical strength of the separator may reduce and the shape may be easily broken.

In an embodiment of the present disclosure, the thickness of the first layer is 50% or more of the total thickness of the separator. Specifically, the thickness of the first layer is 40 *µ*m to 400 *µ*m. When the thickness of the first layer does not reach 50% of the total thickness of the separator or is less than 20 *µ*m, non-uniform charging prevention for the positive electrode is insignificant and the battery may not normally operate. Meanwhile, when the first layer has a very large thickness of more than 500 *µ*m, the energy density of the battery reduces in battery applications.

Meanwhile, the first layer may be nonconductive or conductive. In the present disclosure, the first layer satisfies the above-described structural features, and may comprise, for example, at least one selected from the group consisting of a porous membrane comprising a polymer material, for example, a porous polymer film or nonwoven fabric; a glass fiber; and a carbon paper. In an embodiment of the present disclosure, examples of the polymer film may include a film formed from at least one of polyolefin-based polymers including polyethylene, polypropylene, polybutylene and polypentene. The polyethylene may include, for example, a polymer material such as high density polyethylene, linear low density polyethylene, low density polyethylene and ultrahigh molecular weight polyethylene.

In an embodiment of the present disclosure, the polymer film may be formed by a dry manufacturing method including melting and extruding a polymer resin and stretching to form micropores or a wet manufacturing method including mixing the polymer resin with a pore forming agent, for example, paraffin, to form a film and dissolving a pore forming agent to form micropores.

The nonwoven fabric comprises a polymer material, and the polymer material may include, for example, at least one of polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone or polyester.

In a specific embodiment of the present disclosure, the first layer may be a monolayer. Alternatively, the first layer may have a form of a multilayer comprising at least two unit layers. When the separator comprises at least two unit layers, preferably, each of the unit layers has independently the porosity of 50 vol% or more and 80 vol% or less.

Additionally, each unit layer may comprise at least one selected from the group consisting of a porous membrane comprising a polymer material, for example, a porous polymer film or nonwoven fabric; a glass fiber; and a carbon paper, and for details, reference may be made to the foregoing description.

In an embodiment, when the first layer is the multilayer, the unit layers are arranged with the porosity increasing towards one surface on the basis of the thickness-wise direction of the separator so that the unit layer having the highest porosity is disposed in contact with the positive electrode.

### Second porous separator layer

The separator according to the present disclosure may comprise the second porous separator layer on the other surface opposite one surface. The second layer has the porosity of 25 vol% or more and less than 50 vol%, and is disposed in contact with the negative electrode when making the electrode assembly.

The second layer is not limited to a particular type and includes any insulating material used in electrochemical devices. The second layer electrically separates the negative electrode from the positive electrode and provides a movement passage of lithium ions, and includes any type of material commonly used for separators in lithium secondary batteries without limitation.

In an embodiment of the present disclosure, the second layer may comprise a porous polymer film.

In an embodiment of the present disclosure, examples of the polymer film may include a film of at least one of polyolefin-based polymers including polyethylene, polypropylene, polybutylene and polypentene. The polyethylene may include, for example, high density polyethylene, linear low density polyethylene, low density polyethylene and ultrahigh molecular weight polyethylene.

The polymer film may be formed by a dry manufacturing method including melting and extruding a polymer resin and stretching to form micropores or a wet manufacturing method including mixing the polymer resin with a pore forming agent, for example, paraffin, to form a film and dissolving a pore forming agent to form micropores.

Additionally, the second layer may include a porous nonwoven fabric, for example, a nonwoven fabric comprising a high melting point glass fiber and a polymer material. The polymer material may include, for example, at least one of polyolefin-based polymer including polyethylene or polypropylene, polyethyleneterephthalate, polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone or polyester. Alternatively, the second layer may include a coated porous sheet comprising ceramics or a polymer material to ensure heat resistance or mechanical strength.

In an embodiment of the present disclosure, the second layer may be a monolayer. Alternatively, the second layer is a multilayer comprising at least two unit layers, and when the second layer comprises at least two unit layers, each unit layer preferably has the porosity of less than 50 vol% and 25 vol% or more. In more specific embodiment, when the second layer is the multilayer, the unit layers may be arranged with the porosity decreasing towards the other surface on the basis of the thickness-wise direction of the separator.

In the present disclosure, the unit layer included in the second layer may be at least one of the porous polymer film or the porous polymer nonwoven fabric as described above, and for details, reference may be made to the foregoing description.

In a specific embodiment of the present disclosure, in terms of insulating properties, resistance properties and ionic conductivity, the porosity of the second layer is 25 vol% or more and less than 50 vol%, or 35 vol% or more and less than 50 vol%.

Meanwhile, in a specific embodiment of the present disclosure, the separator comprises the first layer and the second layer, and the first layer and the second layer are stacked in a sequential order. Here, the first layer may have the form of monolayer or multilayer. Alternatively, the second layer may have the form of monolayer or multilayer. In a specific embodiment, the first layer and the second layer may have the form of monolayer.

The second porous separator layer has a thickness of 10 µm to 20 µm, or 15 µm to 20 µm.

The second porous separator layer may have a porosity of 25% to less than 50%, 30% to less than 50%, 35% to less than 50%, or 40% to less than 50%.

In one embodiment of the present invention, each layer in the separator may be bound to each other as a result of the lamination process. Alternatively, without lamination or even if the lamination process is performed, each layer may be simply sequentially stacked without being bounded to each other. Meanwhile, even if each layer is simply stacked, the staked structure of the separator can be stably maintained by external shapefixing elements such as a battery case. In the present specification, the lamination process may mean, for example, a pressurizing process in which electrodes and separators are laminated and then brought into close contact or bonding with each other. In one embodiment of the present invention, the lamination process may be carried out by a hot press.

### Lithium-sulfur battery

Hereinafter, each further component of the lithium-sulfur battery according to the invention will be described in more detail.

### Positive electrode

The positive electrode according to the present disclosure comprises a current collector and a positive electrode active material layer on at least one surface of the current collector.

### Current collector

The current collector may be any material that has electrical conductivity and is used as a current collection component in the corresponding technical field. For example, the positive electrode current collector may include stainless steel, aluminum, nickel, titanium, sintered carbon, or aluminum or stainless steel treated with carbon, nickel, titanium or silver on the surface. The positive electrode current collector may be typically 3 to 500 µm in thickness, and may have textured surface to improve the adhesion between the positive electrode current collector and the positive electrode active material. The positive electrode current collector may come in various forms, for example, a film, a sheet, a foil, a net, a porous body, a foam and a nonwoven.

### Positive electrode active material layer

The positive electrode active material layer comprises a positive electrode active material. The positive electrode active material layer may or may not comprise a conductive material, if necessary. The conductive material refers to a constituent element that is different from a carbon material of a sulfur-carbon composite as described below. The conductive material is different from the positive electrode active material such as a sulfur-carbon composite. For example, the inclusion of the conductive material signifies that another conductive material component that is different from the carbon material included in the sulfur-carbon composite may be included. Alternatively, even when the positive electrode active material layer does not comprise the conductive material, the carbon material of the sulfur-carbon composite is included as the positive electrode active material component.

The positive electrode active material may be included in an amount of 60 wt% or more, or 70 wt% or more, or 80 wt% or more, based on 100 wt% of the positive electrode active material layer. For example, the positive electrode active material may be included in an amount of 90 wt% or more or 99 wt% or more based on 100 wt% of the positive electrode active material layer.

Preferably, the loading amount of the positive electrode active material layer is 4.0 mAh/cm² or more based on the area of the electrode active material layer. In addition, the positive electrode active material layer preferably has the porosity of 60 vol% or lower. When the loading amount and the porosity are in the above-described ranges, the lithium-sulfur battery according to the present disclosure may achieve high energy density of 400 Wh/kg and 600 Wh/L or higher.

In an exemplary embodiment of the present disclosure, the positive electrode active material layer may comprise the positive electrode active material alone. That is to say, the positive electrode active material layer may not comprise any other material, for example, a binder material or a conductive material, except the positive electrode active material. When the positive electrode active material layer comprises any other component than the positive electrode active material, it is desirable to control in the range of less than 1 wt% or less than 0.1 wt% or less than 0.05 wt% of the positive electrode active material layer. In a specific exemplary embodiment of the present disclosure, the positive electrode active material layer comprises the positive electrode active material alone.

Meanwhile, in the present disclosure, the positive electrode active material layer is formed by the dry manufacturing method. In the present specification, the 'dry manufacturing method' refers to compressing the positive electrode active material in powder form into a predetermined shape without 'adding an electrode material to a solvent to prepare a fluidic slurry' when forming the positive electrode active material layer. In an exemplary embodiment of the present disclosure, the positive electrode active material layer may be formed by coating an electrode material in powder form comprising the positive electrode active material on the surface of the current collector and compressing to form a layered structure which may be joined to the current collector at the same time. Alternatively, an electrode material in powder form comprising the positive electrode active material may be compressed to form an electrode film, and the electrode film may be joined with the current collector by the pressure to manufacture the electrode. Meanwhile, in an exemplary embodiment of the present disclosure, the electrode material may comprise the positive electrode active material alone.

According to an exemplary embodiment of the present disclosure, the electrode may be manufactured by feeding the prepared electrode material to a roll-type compression forming device using a feeding device, for example, a screw feeder. In this instance, the electrode material may be simultaneously fed and sent to the forming device such as a compression roller to form the electrode active material layer directly on the current collector. Alternatively, the electrode material may be scattered over the current collector and uniformly spread using a blade to adjust the thickness, and then formed using the compression device.

Meanwhile, in an exemplary embodiment of the present disclosure, the electrode material in powder form comprising the positive electrode active material may be heat-treated at 100°C for a predetermined time before it is coated on the current collector. The heat treatment time is not limited to a particular length of time, but may be about 10 minutes to about 1 hour.

### Positive electrode active material

The positive electrode active material according to the present disclosure comprises a sulfur and/or a sulfur compound, and the sulfur and/or the sulfur compound may be included in the form of a sulfur-carbon composite.

In the present disclosure, the sulfur and/or the sulfur compound may be included in an amount of 60 wt% or more based on 100 wt% of the positive electrode active material layer.

In an embodiment of the present disclosure, the positive electrode active material may comprise the sulfur-carbon composite in an amount of 80 wt% or more and preferably 90 wt% or more based on 100 wt% of the positive electrode active material. More preferably, the positive electrode active material may comprise the sulfur-carbon composite alone.

The lithium-sulfur battery is attracting attention as a promising next-generation secondary battery since compared to other secondary batteries, the lithium-sulfur battery has high discharge capacity and theoretical energy density, and due to the abundance and low cost of sulfur used for the positive electrode active material, it is possible to reduce the battery manufacturing cost and it is environment-friendly.

In the lithium-sulfur battery, the positive electrode active material, sulfur, is nonconductive, and thus, in general, a sulfur-carbon composite produced by combining sulfur with a conductive material such as a carbon material is used to improve the electrical conductivity.

The sulfur-carbon composite comprises a porous carbon material and sulfur, and the sulfur is contained in the pores of the porous carbon material.

In an exemplary embodiment of the present disclosure, the sulfur-carbon composite may comprise sulfur and carbon at the weight ratio of 60:40 to 80:20. When the carbon content in the sulfur-carbon composite exceeds 40 wt%, adhesion strength may decrease. On the other hand, when the carbon content is below 20 wt%, it is difficult to improve the electrical conductivity of sulfur.

The carbon material has a porous structure comprising a plurality of irregular pores on the surface and inside thereof. The carbon material acts as a support to provide the skeleton for uniform and stable fixation of sulfur and improves the electrical conductivity of sulfur to enhance electrochemical reaction. In particular, in the sulfur-carbon composite, when the carbon material that acts as the support for sulfur has large pore volume, large BET specific surface area and optimal particle diameter D₅₀, the carbon material can load a larger amount of sulfur and contributes to low irreversible capacity and high energy density, thereby increasing the availability of sulfur during electrochemical reaction.

In the sulfur-carbon composite of the present disclosure, the carbon material used as the support for sulfur may be typically manufactured by carbonating various carbon precursors.

Meanwhile, in an exemplary embodiment of the present disclosure, the carbon material may have the diameter ranging from 0.5 nm to 10 nm based on the longest diameter. The carbon material may be spherical, rod-shaped, needle-shaped, plate-shaped, tubeshaped or bulk-shaped, and may have any shape commonly used in lithium-sulfur secondary batteries without limitation.

The carbon material may include any type of carbon-based material having porosity and conductivity commonly used in the corresponding technical field. The carbon material may include, for example, at least one selected from the group consisting of graphite; graphene; reduced graphene oxide (rGO); carbon black such as denka black, acetylene black, ketchen black, channel black, furnace black, lamp black, thermal black; carbon nanotubes (CNTs) such as single-walled carbon nanotubes (SWCNTs), multi-walled carbon nanotubes (MWCNTs); carbon fibers such as graphite nanofibers (GNFs), carbon nanofibers (CNFs), activated carbon fibers (ACFs); graphite such as natural graphite, artificial graphite, expandable graphite; carbon nanoribbon; carbon nanobelt, carbon nanorod and activated carbon.

Since the sulfur and/or the sulfur compound itself lacks electrical conductivity, the sulfur and/or the sulfur compound is used in the form of a composite together with the carbon material. In an exemplary embodiment of the present disclosure, the sulfur and/or the sulfur compound may include at least one selected from the group consisting of inorganic sulfur (S₈), Li₂Sₙ (n ≥ 1), a disulfide compound such as 2,5-dimercapto-1,3,4-thiadiazole, 1,3,5-trithiocyanuic acid, an organosulfur compound and a carbon-sulfur polymer ((C₂Sₓ)ₙ, x = 2.5-50, n ≥ 2). Preferably, the sulfur and/or the sulfur compound may include inorganic sulfur (S₈).

In the sulfur-carbon composite according to the present disclosure, the sulfur and/or the sulfur compound may be disposed in at least one of the inside of the pores of the carbon material and the outer surface of the carbon material, and in this instance, the sulfur and/or the sulfur compound may be present in less than 100%, preferably 1 to 95%, and more preferably 60 to 90% of the entire inner and outer surface of the carbon material. When the sulfur and/or the sulfur compound is present on the surface of the carbon material within the above-described range, the maximum effect may be achieved in terms of electron transport area and electrolyte wettability. Specifically, since the sulfur and/or the sulfur compound is uniformly impregnated at a small thickness over the surface of the carbon material within the above-described range, electron transport contact area may be increased during charging and discharging. When the sulfur and/or the sulfur compound is present over 100% area of the entire surface of the carbon material, the carbon material is completely covered with the sulfur, so the electrolyte wettability reduces and the contact between the carbon material and the conductive material included in the electrode decreases, and as a consequence, the carbon material fails to accept electrons and cannot participate in reaction.

Meanwhile, in an exemplary embodiment of the present disclosure, in the sulfur-carbon composite, the sulfur and/or the sulfur compound and the carbon material may be simply mixed or combined into a core-shell structured coating or loading-type. The core-shell structured coating-type may be the coating of any one of the sulfur and/or the sulfur compound and the carbon material on the other, and for example, the surface of the carbon material may be covered with the sulfur and/or the sulfur compound or vice versa. In addition, the loading-type may the loading of the sulfur and/or the sulfur compound in the carbon material, especially in the pores. The sulfur-carbon composite is not limited to a particular type and may include any type of sulfur-carbon composite that satisfies the above-described proportions of the sulfur-based compound and the carbon material.

Meanwhile, in an exemplary embodiment of the present disclosure, the sulfur-carbon composite may have the diameter D₅₀ ranging from 20 to 80 µm to ensure optimal strength and reactivity. When the diameter D₅₀ is less than 20 µm, strength may decrease, and when the diameter D₅₀ exceeds 80 µm, reactivity may decrease.

In an exemplary embodiment of the present disclosure, the sulfur-carbon composite may be obtained by the following manufacturing method.

The method for manufacturing a sulfur-carbon composite according to the present disclosure is not limited to a particular type and may include any method commonly known in the corresponding technical field. The method may comprise (S1) mixing the carbon material with the sulfur and/or the sulfur compound and (S2) forming a composite.

The step (S1) of mixing is performed to increase the miscibility between the sulfur and/or the sulfur compound and the carbon material, and may be performed using a stirring device commonly used in the corresponding technical field. In this instance, the mixing time and speed may be selectively controlled depending on the amounts of raw materials and the conditions.

The step (S2) of forming a composite may be performed by any method commonly used in the corresponding technical field without limitation. For example, the method commonly used in the corresponding technical field may include a dry composite forming method and a wet composite forming method such as spray coating. For instance, a mixture obtained by mixing the sulfur and/or the sulfur compound with the carbon material may be pulverized by ball milling and placed in an oven at 120 to 160°C for 20 minutes to 1 hour so that molten sulfur may be uniformly coated in the carbon material and on the outer surface of the carbon material.

The sulfur-carbon composite manufactured by the above-described manufacturing method may achieve large specific surface area, high loading amount of the sulfur and/or the sulfur compound and improved availability of sulfur, thereby improving the electrochemical reactivity of sulfur, and improve the access and contact of the electrolyte, thereby improving the capacity and life characteristics of the lithium-sulfur battery.

### Other positive electrode materials

In an exemplary embodiment of the present disclosure, the positive electrode active material may comprise the sulfur-carbon composite alone. In addition to the sulfur-carbon composite, the positive electrode active material may further comprise at least one additive selected from the group consisting of transition metals, group IIIA elements, group IVA elements, sulfur compounds of these elements, and alloys of these elements with sulfur.

In a specific exemplary embodiment of the present disclosure, the positive electrode active material layer may comprise a lithium transition metal composite oxide represented by the following [Chemical Formula 1].

[Chemical Formula 1] LiₐNi_{b}Co_{c}M¹_{d}M²ₑO₂

where M¹ may be Mn, Al or a combination thereof, and preferably Mn, or Mn and Al.

M² may be at least one selected from the group consisting of Zr, W, Y, Ba, Ca, Ti, Mg, Ta and Nb, preferably at least one selected from the group consisting of Zr, Y, Mg and Ti, and more preferably Zr, Y or a combination thereof. M² is not an essential component, but when M² is included in an optimal amount, it is possible to promote the particle growth during sintering or improve the crystal structure stability.

### Negative electrode

The negative electrode comprises: a negative electrode current collector; and a negative electrode active material layer on at least one surface of the negative electrode current collector. In an exemplary embodiment of the present disclosure, the negative electrode active material layer may comprise a negative electrode active material, for example, at least one selected from a lithium metal and a lithium alloy. The lithium alloy is an alloy of lithium and a dissimilar metal, and the dissimilar metal may comprise at least one selected from Al and Mg. According to a specific exemplary embodiment of the present disclosure, the negative electrode active material layer may be formed on the surface of the negative electrode current collector in the form of a thin film. The formation method may include preparing a lithium metal thin film having a predetermined thickness and laminating the thin film with the current collector or depositing a lithium metal on the surface of the current collector. The deposition may be performed by various deposition methods, for example, electron-beam deposition, organometallic chemical vapor deposition, reactive sputtering, high-frequency sputtering and magnetron sputtering, but is not limited thereto. Each exemplary deposition method is well known, and the detailed description is omitted.

The negative electrode current collector may include any type of negative electrode current collector commonly used in the corresponding technical field, for example, copper, stainless steel, aluminum, nickel, titanium, sintered carbon, copper or stainless steel treated with carbon, nickel, titanium or silver on the surface and an aluminumcadmium alloy. The negative electrode current collector may be typically 3 to 500 µm in thickness, and in the same way as the positive electrode current collector, may have textured surface to enhance the adhesion between the negative electrode current collector and the negative electrode active material. The negative electrode current collector may come in various forms, for example, a film, a sheet, a foil, a net, a porous body, a foam and a nonwoven.

The conductive material is used to impart the conductive property to the negative electrode, and may include any type of conductive material that has electrical conductivity without causing any chemical change in the battery. Specific examples may include at least one of graphite such as natural graphite or artificial graphite; carbon-based materials such as carbon black, acetylene black, ketchen black, channel black, furnace black, lamp black, thermal black, carbon fiber, carbon nanotubes; metal powder or metal fiber such as copper, nickel, aluminum, silver; conductive whiskers such as zinc oxide, potassium titanate; conducting metal oxides such as titanium oxide; or conductive polymers such as polyphenylene derivatives. The conductive material may be typically included in an amount of 1 to 30 wt%, preferably 1 to 20 wt%, and more preferably 1 to 10 wt% based on the total weight of the negative electrode active material layer.

### Electrolyte

In the present disclosure, the electrolyte may include an organic solvent and a lithium salt.

### Organic solvent

The organic solvent acts as a medium for the movement of ions involved in the electrochemical reaction of the battery.

In the present disclosure, the organic solvent comprises a first organic solvent comprising a fluorinated ether compound and a second organic solvent comprising a glyme compound. The first and second organic solvents may be included at a ratio of 90 vol% or more, preferably 95 vol% or more, and more preferably 99 vol% or more based on 100 vol% of the total organic solvent. In an exemplary embodiment of the present disclosure, the organic solvent may comprise only the first and second organic solvents.

The organic solvent allows the best possible use of 80% or more of the theoretical capacity (1675 mAh/g) of sulfur used as the component of the positive electrode active material. In addition, it is possible to achieve high voltage and high capacity of the discharge voltage of 2.0 V or higher and the discharge capacity of 1300 mAh/g or higher for the positive electrode in the room temperature condition.

Specifically, the first organic solvent is a fluorinated ether compound, and plays a role in preventing the dissolution and decomposition of polysulfide, thereby improving the coulombic efficiency (C.E.) of the battery and ultimately, improving the life characteristics of the battery. More specifically, the first solvent comprising the fluorinated ether compound has higher structural stability than common organic solvents comprising alkanes by fluorine substitution, and thus exhibits very high stability. Therefore, when used in the electrolyte of the lithium-sulfur battery, it is possible to significantly improve the stability of the electrolyte, thereby improving the life characteristics of the lithium-sulfur battery. For example, the fluorinated ether compound may include at least one selected from the group consisting of 1,1,2,2-tetrafluoroethyl 2,2,3,3-tetrafluoropropyl ether (TTE), bis(fluoromethyl) ether, 2-fluoromethyl ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropyl ethyl ether, 1H,1H,2'H,3H-decafluorodipropyl ether and 1H,1H,2'H-perfluorodipropyl ether.

On the other hand, the second solvent is an electrolyte solvent comprising a (nonfluorine-containing) glyme-based compound, and plays a role in dissolving the lithium salt to impart lithium ionic conductivity to the electrolyte and releasing sulfur which is the positive electrode active material to improve the electrochemical reaction with lithium. Specific examples of the glyme-based compound may include at least one selected from the group consisting of dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether. Meanwhile, in an exemplary embodiment of the present disclosure, the second solvent may preferably include dimethoxyethane.

In the present disclosure, a volume ratio of the first and second solvents may be 1:99 to 99:1, but is not limited thereto. In a specific exemplary embodiment of the present disclosure, the organic solvent may comprise the first solvent comprising the fluorinated ether compound in a larger amount than the second solvent comprising the glyme-based compound. When the first solvent comprising the fluorinated ether compound is included in a large amount than the second solvent comprising the glyme-based compound, it is possible to prevent the formation of polysulfide, thereby achieving the battery capacity close to the theoretical capacity of sulfur and suppress the capacity fading of the battery over cycles. Therefore, it is desirable to set that the first solvent comprising the fluorinated ether compound in a larger amount than the second solvent including the glyme-based compound.

In an exemplary embodiment of the present disclosure, preferably, the first solvent may comprise 1,1,2,2-tetrafluoroethyl 2,2,3,3-tetrafluoropropyl ether (TTE) and the second solvent may comprise dimethoxyethane.

Meanwhile, in an exemplary embodiment of the present disclosure, in addition to the first and second organic solvents, the organic solvent may further comprise a third organic solvent, if necessary. The third organic solvent may include, for example, esterbased solvents such as methyl acetate, ethyl acetate, γ-butyrolactone, ε-caprolactone; ether-based solvents such as dibutyl ether or tetrahydrofuran; ketone-based solvents such as cyclohexanone; aromatic hydrocarbon-based solvents such as benzene, fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), propylene carbonate (PC); alcohol-based solvents such as ethyl alcohol, isopropyl alcohol; nitriles such as R-CN (R is a C₂-C₂₀ straight, branched or cyclic hydrocarbon and may comprise an aromatic ring with double bond, or an ether bond); amides such as dimethylformamide; dioxolanes such as 1,3-dioxolane; or sulfolanes, but is not limited thereto.

### Lithium salt

The lithium salt is a compound that can provide lithium ions in the electrolyte. The lithium salt may include LiPF₆, LiClO₄, LiAsF₆, LiBF₄, LiSbF₆, LiAl0₄, LiAlCl₄, LiCF₃CO₂, LiCF₃SO₃, LiC₄F₉SO₃, LiN(C₂F₃SO₃)₂, LiCH₃SO₃, LiN(C₂F₃SO₂)₂, LiN(CF₃SO₂)₂, LiC₄BO₈, LiCl, LiBr, LiB₁₀Cl₁₀, LiI or LiB(C₂O₄)₂. In the present disclosure, the lithium salt preferably includes Li-TFSI to increase the availability of sulfur and achieve high capacity and high voltage of the battery. More preferably, the lithium salt may include LiN(CF₃SO₂)₂ (Li-TFSI) in an amount of 80 wt% or more, 90 wt% or more or 100%, based on 100 wt% of the total lithium salt.

The concentration of the lithium salt may range from 0.1 to 2.0 M, preferably 0.5 to 1 M, and more preferably 0.5 to 0.75 M. When the concentration of the lithium salt is in the above range, the electrolyte has optimal conductivity and viscosity, exhibits the electrolyte performance and allow effective movement of lithium ions. When the concentration of the lithium salt is below the above-described range, it may be difficult to achieve ionic conductivity appropriate for battery operation, and when the concentration of the lithium salt is above the above-described range, the increased viscosity of the electrolyte reduces the mobility of lithium ions or the decomposition reaction of the lithium salt increases, resulting in battery performance degradation.

In a specific exemplary embodiment of the present disclosure, in the electrolyte comprising the first solvent, the second solvent and the lithium salt, a molar ratio of the lithium salt, the second solvent and the first solvent may be 1:0.5 to 3:4.1 to 15. In addition, in an exemplary embodiment of the present disclosure, the molar ratio of the lithium salt, the second solvent and the first solvent may be 1:2:4 to 13, 1:3:3 to 10 or 1:4:5 to 10. That is to say, in the electrolyte included in the lithium-sulfur battery of the present disclosure, the first solvent comprising the fluorinated ether compound may be included in a larger amount than the second solvent comprising the glyme-based compound.

### Other additives

In addition to the above-described electrolyte components, the electrolyte may further comprise an additive to improve the life characteristics of the battery, suppress the decrease capacity fading of the battery, and improve the discharge capacity of the battery. For example, the additive may include at least one of a haloaklylene carbonate-based compound such as difluoroethylene carbonate, pyridine, triethyl phosphite, triethanolamine, a cyclic ether, ethylenediamine, n-glyme, hexamethylphosphoramide, nitrobenzene derivatives, sulfur, a quinoneimmine dye, N-substituted oxazolidinone, N,N-substituted imidazolidine, ethylene glycol dialkyl ether, an ammonium salt, pyrrole, 2-methoxy ethanol or aluminum trichloride, but is not limited thereto. The additive may be included in an amount of 0.1 to 10 wt%, and preferably 0.1 to 5 wt%, based on the total weight of the electrolyte.

In the present disclosure, the electrode assembly comprises the negative electrode, the positive electrode and the separator between the negative electrode and the positive electrode. For example, the negative electrode and the positive electrode may be stacked with the separator interposed between them to form a stack type or stack/folding type structure, or may be wound to form a jelly-roll type structure. When the jelly-roll structure is formed, another separator may be additionally disposed on the outer side to prevent the contact between the negative electrode and the positive electrode.

Another aspect of the present disclosure relates to an electrochemical device comprising the electrode assembly. The electrochemical device comprises a battery case accommodating the electrode assembly and the electrolyte, and the battery case may be the appropriate one selected from any type of battery case commonly used in the corresponding technical filed, and may include, for example, a pouch type and a metal can type.

The lithium-sulfur battery is not limited to a particular type, and may include, for example, cylindrical, stack-type and coin-type.

In addition, the present disclosure provides a battery module comprising the lithium-sulfur battery as a unit cell. The battery module may be used as a power source of middleor large-sized devices requiring stability at high temperature, long cycling characteristics and high capacity characteristics.

Examples of the middle- or large-sized devices may include a power tool; an electric vehicle including an electric vehicle (EV), a hybrid electric vehicle (HEV) and a plug-in hybrid electric vehicle (PHEV); an electric two-wheeled vehicle including an e-bike and an e-scooter; an electric golf cart; and a power storage system, driven by an electric motor, but is not limited thereto.

Hereinafter, examples will be described to help in understanding of the present disclosure, but it is obvious to those skilled in the art that the following examples are provided by way of illustration and various changes and modifications may be made thereto within the scope and technical features of the present disclosure and such changes and modifications fall within the scope of the appended claims.

### Examples

### [Manufacture of sulfur-carbon composite]

Carbon nanotubes (CNTs) (average number of walls = 6) are uniformly mixed with sulfur and pulverized by ball milling, and then placed in an oven at 155°C for 30 minutes to manufacture a sulfur-carbon composite. The sulfur content is 75 wt% based on 100 wt% of the sulfur-carbon composite. The CNTs have a specific surface area of about 3000 m²/g and a pore volume of about 1.9 cm³/g. Additionally, the CNTs have a pore size of about 0.5 to 0.75 nm.

### [Manufacture of positive electrode]

The sulfur-carbon composite obtained in the above-described preparation example is heat-treated at 155°C for 35 minutes. The heat-treated sulfur-carbon composite is coated on a prepared aluminum thin film (thickness = 10 µm) and compressed to manufacture a positive electrode. The manufactured positive electrode has 3 mAh/cm² and a porosity of 60 vol%.

### [Manufacture of battery]

Together with the positive electrode, a 35 µm-thick lithium metal thin film is used for a negative electrode.

An electrolyte is prepared by mixing LiN(CF₃SO₂)₂ (concentration: 0.65 M), dimethoxyethane (second solvent) and 1,1,2,2-tetrafluoroethyl 2,2,3,3-tetrafluoropropyl ether (TTE) (first solvent) at the molar ratio of 1:2:9 under room temperature (20-25 °C).

Specifically, the manufactured positive electrode and negative electrode are placed with the separator interposed between them and the prepared electrolyte is injected to manufacture a lithium-sulfur battery. In the battery, the first porous separator layer of the separator faced to the positive electrode active material layer of the positive electrode and the second porous separator layer of the separator faced to the negative electrode active material layer of the negative electrode. The battery comprises seven sheets of positive electrodes and seven sheets of negative electrodes. The details of the separator used in each example and each comparative example are provided in the following Examples 1 to 4 and Comparative Examples 1 to 4 as summarized in [Table 1] and [Table 2].

### Example 1 (not according to the present invention)

As a second porous separator layer, a polyethylene porous film (thickness 20 µm, porosity 46 vol%) is used, and as a first porous separator layer, a polyethylene terephthalate nonwoven fabric (thickness 30 µm, porosity 50 vol%) is used, and they are joined to prepare a separator.

### Example 2

As a second porous separator layer, a polyethylene porous film (thickness 20 µm, porosity 46 vol%) is used, and as a first porous separator layer, a polyethylene terephthalate nonwoven (thickness 90 µm, porosity 60 vol%) is used, and they are joined to prepare a separator.

### Example 3

As a second porous separator layer, a polyethylene porous film (thickness 20 µm, porosity 46 vol%) is used, and as a first porous separator layer, a carbon paper (thickness 120 µm, porosity 75 vol%) is used, and they are joined to prepare a separator.

### Example 4

As a second porous separator layer, a polyethylene porous film (thickness 20 µm, porosity 46 vol%) is used, and as a first porous separator layer, a glass fiber (thickness 300 µm, porosity 50 vol%) is used, and they are joined to prepare a separator.

### Comparative Example 1

A polyethylene porous film (thickness 20 µm, porosity 46 vol%) is solely used as separator.

### Comparative Example 2

A polyethylene terephthalate nonwoven (thickness 90 µm, porosity 60 vol%) is solely used as a separator.

### Comparative Example 3

A glass fiber (thickness 300 µm, porosity 75 vol%) is solely used as a separator.

### Comparative Example 4

As a second porous separator layer, a polyethylene porous film (thickness 20 µm, porosity 46 vol%) is used, and as a first porous separator layer, a polyethylene porous film (thickness 20 µm, porosity 46 vol%) is used, and they are joined to prepare a separator.

**[Table 1]**

| | | Example 1 (not according to the invention) | Example 2 | Example 3 | Example 4 |
|---|---|---|---|---|---|
| Separator | | Double-layered separator | Double-layered separator | Double-layered separator | Double-layered separator |
| Second porous layer | Material | Polyethylene porous film | Polyethylene porous film | Polyethylene porous film | Polyethylene porous film |
| | Thickness (µm) | 20 | 20 | 20 | 20 |
| | Porosity (vol%) | 46 | 46 | 46 | 46 |
| First porous layer | Material | Polyethylene terephthalate nonwoven | polyethylene terephthalate nonwoven | Carbon paper | Glass fiber |
| | Thickness (µm) | 30 | 90 | 120 | 300 |
| | Porosity (vol%) | 50 | 60 | 75 | 50 |
| Battery operation | | O | O | O | O |

**[Table 2]**

| | | Comparative Example 1 | Comparati ve Example 2 | Comparati ve Example 3 | Comparati ve Example 4 |
|---|---|---|---|---|---|
| Separator | | Single-layered separator | Single-layered separator | Single-layered separator | Double-layered separator |
| Second porous layer | Materi al | Polyethylene porous film | Polyethyle ne terephthal ate nonwoven | Glass fiber | Polyethyle ne porous film |
| | Thick ness (µm) | 20 | 90 | 300 | 20 |
| | Porosi ty (vol%) | 46 | 60 | 75 | 46 |
| First porous layer | Materi al | - | - | - | Polyethyle ne porous film |
| | Thick ness (µm) | - | - | - | 20 |
| | Porosi ty (vol%) | - | - | - | 46 |
| Battery operation | | X | X | X | X |

### [Evaluation]

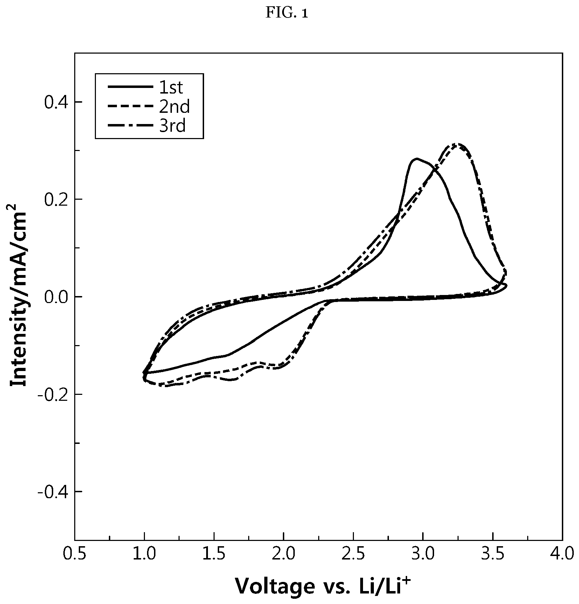

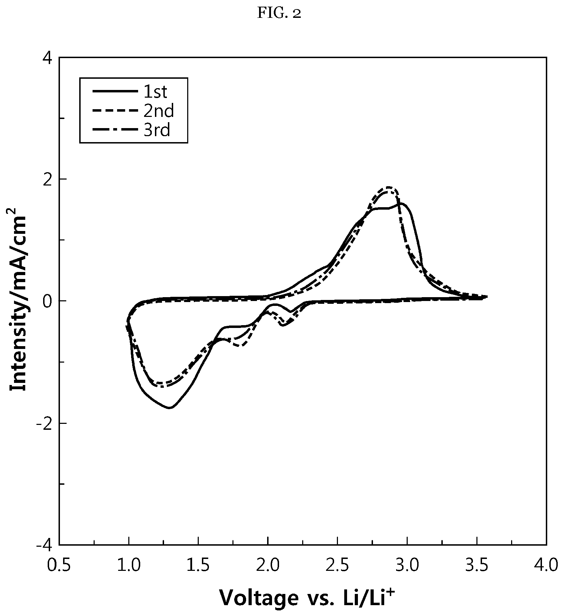

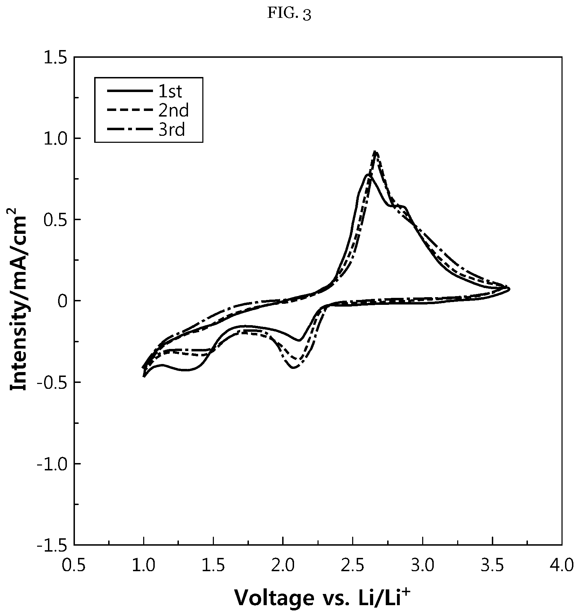

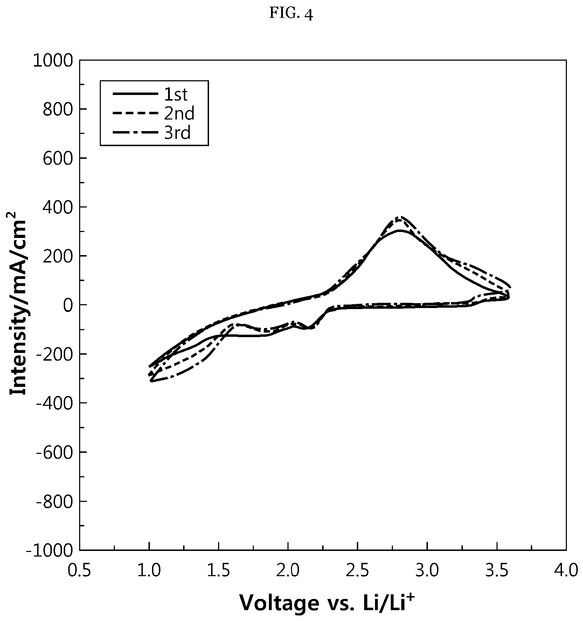

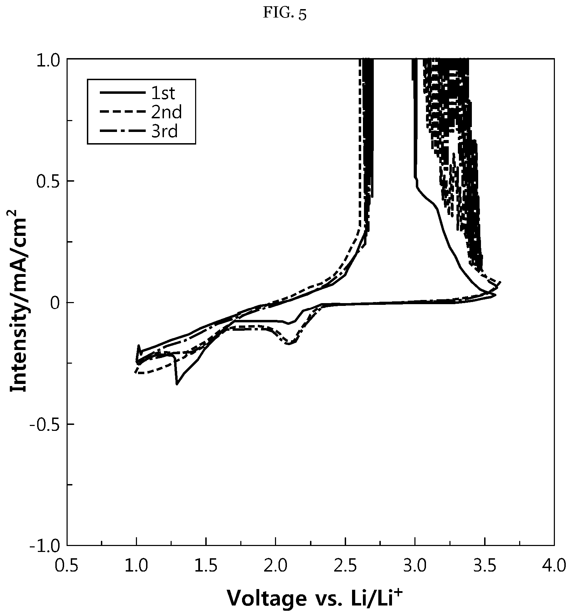

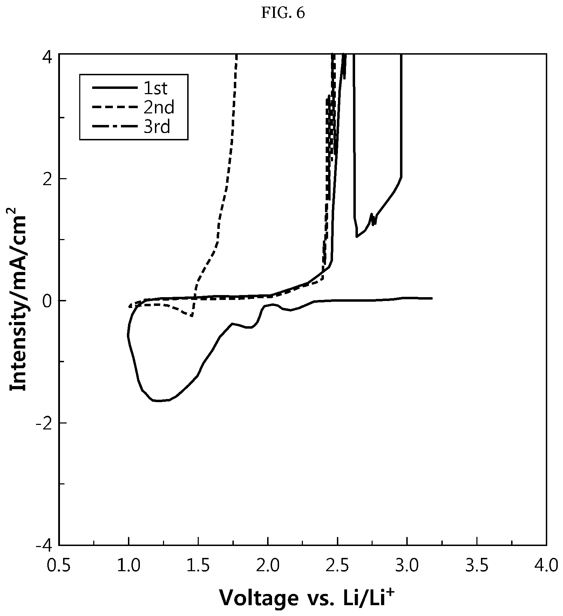

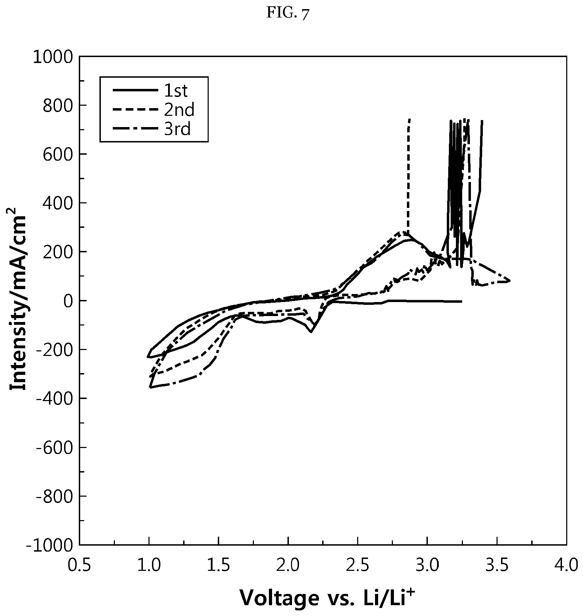

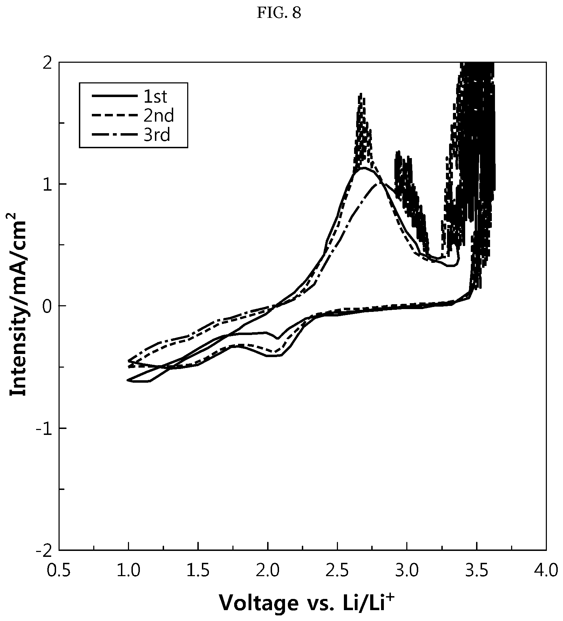

The lithium-sulfur battery according to the present disclosure shows the similar tendency to cyclic voltammetry of the batteries using the common electrodes and is in good operation. FIGS. 1 to 4 show the results of Examples 1 to 4, respectively. It is found that it is possible to manufacture batteries with high energy density. In contrast, in the case of the batteries of the comparative examples that do not comprise the double-layered separator or comprise the double-layered separator, but do not have the structural features according to the present disclosure, the batteries fail to operate. FIGS. 5 to 8 show the results of Comparative Examples 1 to 4, respectively.

### Particle size measurement method

The particle size corresponding to D₅₀ is measured by a dry method using a particle size analyzer (Bluewave, Microtrac). When the carbon material comprises secondary particles by particle agglomeration, primary particle size is observed and measured by electron scanning microscopy (SEM, JEOL).

### Thickness measurement method

The thickness of each porous membrane of the separator is measured using TESA u-hite instrument.

### Cyclic voltammetry measurement method

Cyclic voltammetry is measured the voltage range of 0.5 to 4.0 V for 3 cycles at the scan rate 0.5 mV/s.

## Claims

1. Separator for a lithium-sulfur battery, comprising:
a first layer having a porosity of 50 vol% or more,
wherein the first layer is on a first surface of the separator,
wherein a thickness of the first layer is 50% or more of 100% of a thickness of the separator and the thickness of the first layer 40 µm to 400 µm,
wherein the porosity and the thickness are measured as disclosed in the specification; and
the separator comprises a second layer having a porosity of 25 vol% or more and less than 50 vol%, the second layer is on a second surface opposite the first surface of the separator, and
the thickness of the second layer is from 10 µm to 20 µm.

2. Separator for a lithium-sulfur battery according to claim 1, wherein the porosity of the first layer is 80 vol% or less.

3. Separator for a lithium-sulfur battery according to claim 1, wherein the separator comprises the first layer and the second layer, and the first layer and the second layer are stacked in a sequential order.

4. Separator for a lithium-sulfur battery according to any of the preceding claims, wherein the first layer is a monolayer or a multilayer comprising at least two unit layers, and when the first layer comprises the at least two unit layers, each unit layer has a porosity of 50 vol% or more and 80 vol% or less.

5. Separator for a lithium-sulfur battery according to claim 4, wherein when the first layer is the multilayer, the unit layers are arranged with the porosity increasing towards the first surface on a basis of a thickness-wise direction of the separator.

6. Separator for a lithium-sulfur battery according to any of the claims 1 to 5, wherein the second layer is a monolayer or a multilayer comprising at least two unit layers, and when the second layer comprises the at least two unit layers, each unit layer has a porosity of less than 50 vol% and 25 vol% or more.

7. Separator for a lithium-sulfur battery according to claim 6, wherein when the second layer is the multilayer, the unit layers are arranged with the porosity decreasing towards the second surface on a basis of a thickness-wise direction of the separator.

8. Separator for a lithium-sulfur battery according to any of the preceding claims, wherein the thickness of the separator is 20 *µ*m to 500 *µ*m.

9. Separator for a lithium-sulfur battery according to any of the preceding claims, wherein the first layer comprises at least one of a porous polymer film, a porous nonwoven fabric comprising a polymer material, a glass fiber and a carbon paper.

10. Separator for a lithium-sulfur battery according to any of the preceding claims 1 to 9, wherein the second layer comprises a porous polymer film or a porous nonwoven fabric comprising a polymer material or both of them.

11. Lithium-sulfur battery, comprising:
an electrode assembly and an electrolyte,
wherein the electrode assembly comprises a positive electrode, a negative electrode and a separator between the negative electrode and the positive electrode,
wherein the positive electrode comprises a positive electrode active material layer, and the positive electrode active material layer comprises a sulfur and/or a sulfur compound,
wherein the separator is defined in any one of claims 1 to 110, and
wherein the first layer of the separator is in contact with the positive electrode active material layer.

12. Lithium-sulfur battery according to claim 11, wherein the electrolyte comprises a lithium salt and an organic solvent, and the organic solvent comprises a first organic solvent comprising a fluorinated ether compound and a second organic solvent comprising a glyme-based compound.

13. Lithium-sulfur battery according to claim 11 or 12, wherein the sulfur and/or the sulfur compound is included in the positive electrode active material layer in a form of a sulfur-carbon composite, and the sulfur and/or the sulfur compound is included in an amount of 60 wt% or more based on 100 wt% of the positive electrode active material layer.

14. Lithium-sulfur battery according to claim 13, wherein the sulfur-carbon composite comprises sulfur and carbon at a weight ratio of 60:40 to 80:20.

15. Lithium-sulfur battery according to any of the preceding claims 11 to 14, wherein the positive electrode comprises a current collector and a positive electrode active material layer on at least one surface of the current collector, the positive electrode active material layer comprises only a positive electrode active material, the positive electrode active material is included in an amount of 99 wt% or more based on 100 wt% of the positive electrode active material layer, the positive electrode active material comprises a sulfur-carbon composite in an amount of 90 wt% or more based on 100 wt% of the positive electrode active material, and the sulfur-carbon composite comprises the sulfur and/or the sulfur compound.

16. Lithium-sulfur battery according to any of the preceding claims 11 to 15, wherein the negative electrode comprises a negative electrode active material, the negative electrode active material comprises a lithium metal and/or a lithium alloy, and the lithium alloy is an alloy of a lithium with a metal.

17. Lithium-sulfur battery according to any of the preceding claims 12 to 16, wherein the first and second organic solvents are included in an amount of 90 vol% or more based on 100 vol% of the total organic solvent.

18. Lithium-sulfur battery according to any of the preceding claims 12 to 17, wherein the first organic solvent comprises at least one selected from the group consisting of 1,1,2,2-tetrafluoroethyl 2,2,3,3-tetrafluoropropyl ether (TTE), bis(fluoromethyl) ether, 2-fluoromethyl ether, bis(2,2,2-trifluoroethyl) ether, propyl 1,1,2,2-tetrafluoroethyl ether, isopropyl 1,1,2,2-tetrafluoroethyl ether, 1,1,2,2-tetrafluoroethyl isobutyl ether, 1,1,2,3,3,3-hexafluoropropyl ethyl ether, 1H,1H,2'H,3H-decafluorodipropyl ether and 1H,1H,2'H-perfluorodipropyl ether.

19. Lithium-sulfur battery according to any of the preceding clams 12 to 18, wherein the second organic solvent does not comprise fluorine and comprises at least one selected from the group consisting of dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether.

20. Lithium-sulfur battery according to any of the preceding claims 11 to 19, wherein the electrolyte comprises lithium-bis(trifluoromethanesulfonyl)imide, dimethoxyethane and 1,1,2,2-tetrafluoroethyl-2,2,3,3-tetrafluoropropyl ether.

## Patentansprüche

1. Separator für eine Lithium-Schwefel-Batterie, umfassend:
eine erste Schicht mit einer Porosität von 50 Vol.-% oder mehr,
wobei sich die erste Schicht auf einer ersten Oberfläche des Separators befindet,
wobei eine Dicke der ersten Schicht 50 % oder mehr von 100 % einer Dicke des Separators beträgt und die Dicke der ersten Schicht 40 µm bis 400 µm beträgt,
wobei die Porosität und die Dicke wie in der Beschreibung offenbart gemessen werden; und
der Separator eine zweite Schicht mit einer Porosität von 25 Vol.-% oder mehr und weniger als 50 Vol.-% umfasst, wobei sich die zweite Schicht auf einer zweiten Oberfläche gegenüber der ersten Oberfläche des Separators befindet, und
die Dicke der zweiten Schicht 10 µm bis 20 µm beträgt.

2. Separator für eine Lithium-Schwefel-Batterie nach Anspruch 1, wobei die Porosität der ersten Schicht 80 Vol.-% oder weniger beträgt.

3. Separator für eine Lithium-Schwefel-Batterie nach Anspruch 1, wobei der Separator die erste Schicht und die zweite Schicht umfasst und die erste Schicht und die zweite Schicht in einer sequentiellen Reihenfolge gestapelt sind.

4. Separator für eine Lithium-Schwefel-Batterie nach einem der vorhergehenden Ansprüche, wobei die erste Schicht eine Monoschicht oder eine Multischicht ist, die mindestens zwei Einheitsschichten umfasst, und wenn die erste Schicht die mindestens zwei Einheitsschichten umfasst, jede Einheitsschicht eine Porosität von 50 Vol.-% oder mehr und 80 Vol.-% oder weniger aufweist.

5. Separator für eine Lithium-Schwefel-Batterie nach Anspruch 4, wobei, wenn die erste Schicht die Multischicht ist, die Einheitsschichten mit der Porosität in Richtung der ersten Oberfläche auf einer Basis einer Dickenrichtung des Separators zunehmend angeordnet sind.

6. Separator für eine Lithium-Schwefel-Batterie nach einem der Ansprüche 1 bis 5, wobei die zweite Schicht eine Monoschicht oder eine Multischicht ist, die mindestens zwei Einheitsschichten umfasst, und wenn die zweite Schicht die mindestens zwei Einheitsschichten umfasst, jede Einheitsschicht eine Porosität von weniger als 50 Vol.-% und 25 Vol.-% oder mehr aufweist.

7. Separator für eine Lithium-Schwefel-Batterie nach Anspruch 6, wobei, wenn die zweite Schicht die Multischicht ist, die Einheitsschichten mit der Porosität in Richtung der zweiten Oberfläche auf einer Basis einer Dickenrichtung des Separators abnehmend angeordnet sind.

8. Separator für eine Lithium-Schwefel-Batterie nach einem der vorhergehenden Ansprüche, wobei die Dicke des Separators 20 µm bis 500 µm beträgt.

9. Separator für eine Lithium-Schwefel-Batterie nach einem der vorhergehenden Ansprüche, wobei die erste Schicht mindestens eines von einem porösen Polymerfilm, einem porösen Vliesstoff, der ein Polymermaterial umfasst, einer Glasfaser und einem Kohlepapier umfasst.

10. Separator für eine Lithium-Schwefel-Batterie nach einem der vorhergehenden Ansprüche 1 bis 9, wobei die zweite Schicht einen porösen Polymerfilm oder einen porösen Vliesstoff, der ein Polymermaterial umfasst, oder beides umfasst.

11. Lithium-Schwefel-Batterie, umfassend:
eine Elektrodenanordnung und einen Elektrolyten,
wobei die Elektrodenanordnung eine positive Elektrode, eine negative Elektrode und einen Separator zwischen der negativen Elektrode und der positiven Elektrode umfasst,
wobei die positive Elektrode eine Aktivmaterialschicht der positiven Elektrode umfasst und die Aktivmaterialschicht der positiven Elektrode einen Schwefel und/oder eine Schwefelverbindung umfasst,
wobei der Separator in einem der Ansprüche 1 bis 10 definiert ist, und
wobei die erste Schicht des Separators in Kontakt mit der Aktivmaterialschicht der positiven Elektrode ist.

12. Lithium-Schwefel-Batterie nach Anspruch 11, wobei der Elektrolyt ein Lithiumsalz und ein organisches Lösungsmittel umfasst und das organische Lösungsmittel ein erstes organisches Lösungsmittel, das eine fluorierte Etherverbindung umfasst, und ein zweites organisches Lösungsmittel, das eine Verbindung auf Glyme-Basis umfasst, umfasst.

13. Lithium-Schwefel-Batterie nach Anspruch 11 oder 12, wobei der Schwefel und/oder die Schwefelverbindung in der Aktivmaterialschicht der positiven Elektrode in Form eines Schwefel-Kohlenstoff-Verbundstoffs enthalten ist und der Schwefel und/oder die Schwefelverbindung in einer Menge von 60 Gew.-% oder mehr, bezogen auf 100 Gew.-% der Aktivmaterialschicht der positiven Elektrode, enthalten ist.

14. Lithium-Schwefel-Batterie nach Anspruch 13, wobei der Schwefel-Kohlenstoff-Verbundstoff Schwefel und Kohlenstoff in einem Gewichtsverhältnis von 60:40 bis 80:20 umfasst.

15. Lithium-Schwefel-Batterie nach einem der vorhergehenden Ansprüche 11 bis 14, wobei die positive Elektrode einen Stromabnehmer und eine Aktivmaterialschicht der positiven Elektrode auf mindestens einer Oberfläche des Stromabnehmers umfasst, die Aktivmaterialschicht der positiven Elektrode nur ein Aktivmaterial der positiven Elektrode umfasst, das Aktivmaterial der positiven Elektrode in einer Menge von 99 Gew.-% oder mehr, bezogen auf 100 Gew.-% der Aktivmaterialschicht der positiven Elektrode, enthalten ist, das Aktivmaterial der positiven Elektrode einen Schwefel-Kohlenstoff-Verbundstoff in einer Menge von 90 Gew.-% oder mehr, bezogen auf 100 Gew.-% des Aktivmaterials der positiven Elektrode, umfasst und der Schwefel-Kohlenstoff-Verbundstoff den Schwefel und/oder die Schwefelverbindung umfasst.

16. Lithium-Schwefel-Batterie nach einem der vorhergehenden Ansprüche 11 bis 15, wobei die negative Elektrode ein Aktivmaterial der negativen Elektrode umfasst, das Aktivmaterial der negativen Elektrode ein Lithiummetall und/oder eine Lithiumlegierung umfasst und die Lithiumlegierung eine Legierung eines Lithiums mit einem Metall ist.

17. Lithium-Schwefel-Batterie nach einem der vorhergehenden Ansprüche 12 bis 16, wobei das erste und das zweite organische Lösungsmittel in einer Menge von 90 Vol.-% oder mehr, bezogen auf 100 Vol.-% des gesamten organischen Lösungsmittels, enthalten sind.

18. Lithium-Schwefel-Batterie nach einem der vorhergehenden Ansprüche 12 bis 17, wobei das erste organische Lösungsmittel mindestens eines, ausgewählt aus der Gruppe, bestehend aus 1,1,2,2-Tetrafluorethyl-2,2,3,3-tetrafluorpropylether (TTE), Bis(fluormethyl)ether, 2-Fluormethylether, Bis(2,2,2-trifluorethyl)ether, Propyl-1,1,2,2-tetrafluorethylether, Isopropyl-1,1,2,2-tetrafluorethylether, 1,1,2,2-Tetrafluorethylisobutylether, 1,1,2,3,3,3-Hexafluorpropylethylether, 1H,1H,2'H,3H-Decafluordipropylether und 1H,1H,2'H-Perfluordipropylether, umfasst.

19. Lithium-Schwefel-Batterie nach einem der vorhergehenden Ansprüche 12 bis 18, wobei das zweite organische Lösungsmittel kein Fluor umfasst und mindestens eines, ausgewählt aus der Gruppe, bestehend aus Dimethoxyethan, Diethoxyethan, Methoxyethoxyethan, Diethylenglykoldimethylether, Diethylenglykoldiethylether, Diethylenglykolmethylethylether, Triethylenglykoldimethylether, Triethylenglykoldiethylether, Triethylenglykolmethylethylether, Tetraethylenglykoldimethylether, Tetraethylenglykoldiethylether, Tetraethylenglykolmethylethylether, Polyethylenglykoldimethylether, Polyethylenglykoldiethylether und Polyethylenglykolmethylethylether, umfasst.

20. Lithium-Schwefel-Batterie nach einem der vorhergehenden Ansprüche 11 bis 19, wobei der Elektrolyt Lithium-bis(trifluormethansulfonyl)imid, Dimethoxyethan und 1,1,2,2-Tetrafluorethyl-2,2,3,3-tetrafluorpropylether umfasst.

## Revendications

1. Séparateur pour une batterie lithium-soufre, comprenant :
une première couche ayant une porosité de 50 % en volume ou plus,
dans lequel la première couche est sur une première surface du séparateur,
dans lequel une épaisseur de la première couche est de 50 % ou de plus de 100 % d'une épaisseur du séparateur et l'épaisseur de la première couche est de 40 µm à 400 µm,
dans lequel la porosité et l'épaisseur sont mesurées comme il est divulgué dans la description ; et
le séparateur comprend une deuxième couche ayant un porosité de 25 % en volume ou plus et de moins de 50 % en volume, la deuxième couche est sur une deuxième surface à l'opposé de la première surface du séparateur, et
l'épaisseur de la deuxième couche est de 10 µm à 20 µm.

2. Séparateur pour une batterie lithium-soufre selon la revendication 1, dans lequel la porosité de la première couche est de 80 % en volume ou moins.

3. Séparateur pour une batterie lithium-soufre selon la revendication 1, où le séparateur comprend la première couche et la deuxième couche, et la première couche et la deuxième couche sont empilées dans un ordre séquentiel.

4. Séparateur pour une batterie lithium-soufre selon l'une quelconque des revendications précédentes, dans lequel la première couche est une monocouche ou une multicouche comprenant au moins deux couches unitaires, et lorsque la première couche comprend les au moins deux couches unitaires, chaque couche unitaire a une porosité de 50 % en volume ou plus et de 80 % en volume ou moins.

5. Séparateur pour une batterie lithium-soufre selon la revendication 4, dans lequel lorsque la première couche est la multicouche, les couches unitaires sont arrangées avec la porosité augmentant vers la première surface sur une base d'une direction dans le sens de l'épaisseur du séparateur.

6. Séparateur pour une batterie lithium-soufre selon l'une quelconque des revendications 1 à 5, dans lequel la deuxième couche est une monocouche ou une multicouche comprenant au moins deux couches unitaires, et lorsque la deuxième couche comprend les au moins deux couches unitaires, chaque couche unitaire a une porosité de moins de 50 % en volume et de 25 % en volume ou plus.

7. Séparateur pour une batterie lithium-soufre selon la revendication 6, dans lequel lorsque la deuxième couche est la multicouche, les couches unitaires sont arrangées avec la porosité diminuant vers la deuxième surface sur une base d'une direction dans le sens de l'épaisseur du séparateur.

8. Séparateur pour une batterie lithium-soufre selon l'une quelconque des revendications précédentes, dans lequel l'épaisseur du séparateur est de 20 µm à 500 µm.

9. Séparateur pour une batterie lithium-soufre selon l'une quelconque des revendications précédentes, dans lequel la première couche comprend au moins l'un d'entre un film polymère poreux, un tissu non tissé poreux comprenant un matériau polymère, de la fibre de verre et du papier carbone.

10. Séparateur pour une batterie lithium-soufre selon l'une quelconque des revendications précédentes 1 à 9, dans lequel la deuxième couche comprend un film polymère poreux ou un tissu non tissé poreux comprenant un matériau polymère ou les deux.

11. Batterie lithium-soufre, comprenant :
un ensemble d'électrodes et un électrolyte,
dans laquelle l'ensemble d'électrodes comprend une électrode positive, une électrode négative et un séparateur entre l'électrode négative et l'électrode positive,
dans laquelle l'électrode positive comprend une couche de matériau actif d'électrode positive, et la couche de matériau actif d'électrode positive comprend du soufre et/ou un composé de soufre,
dans laquelle le séparateur est défini selon l'une quelconque des revendications 1 à 10, et
dans laquelle la première couche du séparateur est en contact avec la couche de matériau actif d'électrode positive.

12. Batterie lithium-soufre selon la revendication 11, dans laquelle l'électrolyte comprend un sel de lithium et un solvant organique, et le solvant organique comprend un premier solvant organique comprenant un composé d'éther fluoré et un deuxième solvant organique comprenant un composé à base de glyme.

13. Batterie lithium-soufre selon la revendication 11 ou 12, dans laquelle le soufre et/ou le composé de soufre est inclus dans la couche de matériau actif d'électrode positive sous une forme de composite de soufre-carbone, et le soufre et/ou le composé de soufre est inclus en une quantité de 60 % en poids ou plus sur la base de 100 % en poids de la couche de matériau actif d'électrode positive.

14. Batterie lithium-soufre selon la revendication 13, dans laquelle le composite de soufre-carbone comprend du soufre et du carbone à un rapport pondéral de 60:40 à 80:20.

15. Batterie lithium-soufre selon l'une quelconque des revendications précédentes 11 à 14, dans laquelle l'électrode positive comprend un collecteur de courant et une couche de matériau actif d'électrode positive sur au moins une surface du collecteur de courant, la couche de matériau actif d'électrode positive comprend seulement un matériau actif d'électrode positive, le matériau actif d'électrode positive est inclus en une quantité de 99 % en poids ou plus sur la base de 100 % en poids de la couche de matériau actif d'électrode positive, le matériau actif d'électrode positive comprend un composite de soufre-carbone en une quantité de 90 % en poids sur la base de 100 % en poids du matériau actif d'électrode positive, et le composite de soufre-carbone comprend le soufre et/ou le composé de soufre.

16. Batterie lithium-soufre selon l'une quelconque des revendications précédentes 11 à 15, dans laquelle l'électrode négative comprend un matériau actif d'électrode négative, le matériau actif d'électrode négative comprend du lithium métal et/ou un alliage de lithium, et l'alliage de lithium est un alliage de lithium avec un métal.

17. Batterie lithium-soufre selon l'une quelconque des revendications précédentes 12 à 16, dans laquelle les premier et deuxième solvants organiques sont inclus en une quantité de 90 % en volume ou plus sur la base de 100 % en volume de solvant organique total.

18. Batterie lithium-soufre selon l'une quelconque des revendications précédentes 12 à 17, dans laquelle le premier solvant organique comprend au moins l'un sélectionné parmi le groupe composé d'éther de 1,1,2,2-tétrafluoroéthyle 2,2,3,3-tétrafluoropropyle (TTE), éther de bis(fluorométhyle), éther de 2-fluorométhyle, éther de bis(2,2,2-trifluoroéthyle), éther de propyle 1,1,2,2-tétrafluoroéthye, éther d'isopropyle 1,1,2,2-tétrafluoroéthyle, éther de 1,1,2,2-tétrafluoroéthyle isobutyle, éther de 1,1,2,3,3,3-hexafluoropropyle éthyle, éther de 1H,1H,2'H,3H-décafluorodipropyle et éther de 1H,1H,2'H-perfluorodipropyle.

19. Batterie lithium-soufre selon l'une quelconque des revendications précédentes 12 à 18, dans laquelle le deuxième solvant organique ne comprend pas de fluor et comprend au moins l'un sélectionné parmi le groupe composé de diméthoxyéthane, diéthoxyéthane, méthoxyéthoxyéthane, éther de diéthylène glycol diméthyle, éther de diéthylène glycol diéthyle, éther de diéthylène glycol méthyle éthyle, éther de triéthylène glycol diméthyle, éther de triéthylène glycol diéthyle, éther de triéthylène glycol méthyle éthyle, éther de tétraéthylène glycole diméthyle, éther de tétraéthylène glycol diéthyle, éther de tétraéthylène glycol méthyle éthyle, éther de polyéthylène glycol diméthyle, éther de polyéthylène glycol diéthyle et éther de polyéthylène glycol méthyle éthyle.

20. Batterie lithium-soufre selon l'une quelconque des revendications précédentes 11 à 19, dans laquelle l'électrolyte comprend du lithium-bis(trifluorométhanesulfonyl)imide, du diméthoxyéthane et de l'éther de 1,1,2,2-tétrafluoroéthyl-2,2,3,3-tétrafluoropropyle.
